# EUROPÄISCHE PATENTSCHRIFT

(11) **EP 3 494 319 B1**
(45) Veröffentlichungstag und Bekanntmachung des Hinweises auf die Patenterteilung: **10.06.2020**
(21) Anmeldenummer: 17746374.2
(22) Anmeldetag: 19.06.2017
(51) Int. Cl.: F16C 43/06, F16C 19/36, F16C 33/46, F16C 33/49, F16C 43/08, F16C 33/58, F16C 33/36

(54) **VERFAHREN UND VORRICHTUNG ZUR MONTAGE EINES SCHRÄGROLLENLAGERS**
METHOD AND DEVICE FOR ASSEMBLY OF AN ANGULAR CONTACT ROLLER BEARING
PROCÉDÉ ET DISPOSITIF POUR LE MONTAGE D'UN ROULEMENT À ROULEAUX À CONTACT OBLIQUE

(30) Priorität: 03.08.2016 DE 102016214346
(43) Veröffentlichungstag der Anmeldung: 12.06.2019
(73) Patentinhaber: Schaeffler Technologies AG & Co. KG, 91074 Herzogenaurach (DE)
(72) Erfinder: RUMPEL, Reinhard, 97228 Rottendorf (DE); HOFMANN, Heinrich, 97422 Schweinfurt (DE); GEIGER, Ernst, 91352 Hallerndorf (DE); EIDLOTH, Rainer, 91074 Herzogenaurach (DE)
(86) Internationale Anmeldenummer: PCT/DE2017/100506
(87) Internationale Veröffentlichungsnummer: WO 2018/024279

(56) Entgegenhaltungen:
- WO-A2-2009/121533
- DE-A1- 3 023 811
- DE-A1-102014 200 665
- DE-C- 344 090
- DE-C- 521 398
- US-A- 1 212 253
- US-A- 1 545 841
- US-A- 2 042 417
- US-A- 2 633 627

## Beschreibung

### Gebiet der Erfindung

Die Erfindung betrifft ein Verfahren zur Montage eines insbesondere einreihigen Schrägrollenlagers, welches insbesondere vorteilhaft als Festlager zur Lagerung der Hauptwelle in einem Kraftfahrzeug-Getriebe anwendbar ist. Ferner betrifft die Erfindung eine Vorrichtung zur Montage des Schrägrollenlagers.

### Hintergrund der Erfindung

Der als Festlager zur Lagerung der Hauptwelle in einem Kraftfahrzeug-Getriebe am häufigsten verwendete Lagertyp ist das einreihige Rillenkugellager, da dieses sich durch eine gleichermaßen hohe radiale und axiale Tragfähigkeit auszeichnet und wegen seiner geringen Reibung die höchsten Drehzahlgrenzen aller Lagerarten aufweist. Dieses Rillenkugellager besteht in bekannter Weise aus einem äußeren Lagerring und einem inneren Lagerring sowie aus einer Vielzahl zwischen den Lagerringen angeordneter Lagerkugeln, die in in die Innenseite des äußeren Lagerrings und in die Außenseite des inneren Lagerrings eingearbeitete rillenförmigen Laufbahnen abrollen und durch einen Lagerkäfig in gleichmäßigen Abständen zueinander geführt werden. Das Einsetzten der Lagerkugeln in das Rillenkugellager erfolgt dabei zumeist durch das mit der DE 168 499 C bekannt gewordene Exzentermontageverfahren, bei dem die beiden Lagerringe exzentrisch zueinander angeordnet werden und der dadurch entstehende freie Raum zwischen den Lagerringen mit den Lagerkugeln befüllt wird, anschließend die Lagerringe unter Ausnutzung ihrer Elastizität in eine konzentrische Stellung zueinander gebracht werden und nach einer gleichmäßigen Umfangsverteilung der Lagerkugeln der Lagerkäfig eingesetzt wird.

In der Praxis hat es sich jedoch erwiesen, dass derartigen Rillenkugellagern aufgrund der geringen maximal einbaubaren Anzahl von Lagerkugeln, die von den Abmessungen des inneren und des äußeren Lagerrings sowie vom Durchmesser der Lagerkugeln abhängig ist, vor allem in Bezug auf die radiale Tragfähigkeit des Lagers immer gewisse Grenzen gesetzt sind. In der Vergangenheit wurden daher eine Vielzahl von Lösungen, wie beispielsweise eine in den sich gegenüberliegenden Borden der Laufbahnen des äußeren und des inneren Lagerrings angeordnete unverschlossene Einfüllöffnung gemäß DE 151 483 C oder eine ähnlich ausgebildete verschließbare Einfüllöffnung gemäß DE 24 07 477 A1, vorgeschlagen, mit denen durch eine Erhöhung der Anzahl der Lagerkugeln eine Erhöhung der radialen Tragfähigkeit von Rillenkugellagern erreicht werden sollte, die sich aber aufgrund der aus solchen Einfüllöffnungen resultierenden Nachteile in der Praxis nicht durchsetzen konnten.

Eine andere naheliegende Möglichkeit, die Tragfähigkeit des Festlagers zur Lagerung der Hauptwelle in einem Kraftfahrzeug-Getriebe zu erhöhen, wäre der Ersatz des bisher verwendeten Rillenkugellagers durch ein Zylinderrollenlager vom Typ NUP, wie es beispielsweise aus dem Katalog "Wälzlager" der Anmelderin vom Oktober 2008 auf den Seiten 393 und 396 bekannt ist. Dieses Zylinderrollenlager weist sowohl am inneren Lagerring als auch am äußeren Lagerring zwei seitliche Borde auf und ist zur Aufnahme hoher Radiallasten sowie von Axiallasten in beide Richtungen geeignet. Derartige Zylinderrollenlager weisen jedoch durch den hohen Anteil spanender Bearbeitung, insbesondere bei der Laufbahnherstellung und bei der Bordbearbeitung, sehr hohe Fertigungskosten auf und wären zudem in ihrer Tragfähigkeit wiederum überdimensioniert, so dass diese für den Einsatz als Festlager in Kraftfahrzeug-Schaltgetrieben letztendlich ungeeignet sind.

Ein weiterer, zur als Festlager zur Lagerung der Hauptwelle in einem Kraftfahrzeug-Getriebe geeigneter und für die vorliegende Erfindung den nächstliegenden Stand der Technik bildender Lagertyp, dessen Aufnahmefähigkeit von Radialkräften und von Axialkräften in beide Richtungen größer als die von Rillenkugellagern ist, ist durch die Druckschriften DE 6 917 609 U und CH 463 886 A bekannt geworden. In diesen Druckschriften wird jeweils ein Schrägrollenlager offenbart, welches im Wesentlichen aus einem inneren Lagerring mit einer an dessen äußerer Mantelfläche schräg zur radialen Lagerachse angeordneten inneren Laufbahn und einem diese Laufbahn an ihrem kleinsten Durchmesser begrenzenden Bord, aus einem äußeren Lagerring mit einer an dessen innerer Mantelfläche ebenfalls schräg zur radialen Lagerachse angeordneten äußeren Laufbahn und einem diese Laufbahn an ihrem größten Durchmesser begrenzenden Bord sowie aus einer Vielzahl zwischen den Lagerringen angeordneter und auf deren Laufbahnen abrollender Rollenwälzkörper besteht, die in Umfangsrichtung durch einen Lagerkäfig in gleichmäßigen Abständen zueinander gehalten werden. Zur Ermöglichung des Einsetzens der als Kegelrollen ausgebildeten Wälzkörper in den jeweils als Taschen- bzw. als Fensterkäfig ausgebildeten Lagerkäfig ist bei dem Schrägrollenlager gemäß DE 6 917 609 U der Bord am inneren Lagerring und bei dem Schrägrollenlager gemäß CH 463 886 A der Bord am äußeren Lagerring als separates Bauteil ausgebildet, der nach der Lagermontage am inneren bzw. äußeren Lagerring befestigt wird. Dies erfolgt bei dem Schrägrollenlager gemäß DE 6 917 609 U durch einen gesonderten geschlitzten, im Querschnitt U-förmigen Ring, dessen radiale Schenkel in entsprechende Nuten im Bord und im inneren Lagerring eingreifen, und bei dem Schrägrollenlager gemäß CH 463 886 A durch einen an die Unterseite des Bordes angeformten umlaufenden Bund, der in den äußeren Lagerring eingepresst wird.

Aus DE 344 090 C ist ein Exzentermontageverfahren für ein Schrägrollenlager bekannt. DE 30 23 811 A1 und US 2 633 627 A zeigen jeweils Exzenter-Schwenk-Montageverfahren für Rillenkugellager. US 1 212 253 A zeigt ein gattungsgemäßes Verfahren zur Montage eines Schrägrollenlager. WO 2009/121533 A2 zeigt eine gattungsgemäße Montagevorrichtung.

Bei derartigen Schrägrollenlagern sind zwar dadurch, dass nur noch einer der Lagerringe mit nur noch einem seitlichen Bord einteilig ausgebildet ist, der Anteil der spanenden Bearbeitung bei der Laufbahnherstellung und bei der Bordbearbeitung und damit auch die Gesamtkosten für die Lagerfertigung wesentlich geringer als bei dem vorbeschriebenen Zylinderrollenlager, dennoch wirkt sich bei diesen Schrägrollenlagern die Ausbildung des Bordes am jeweils anderen Lagerring als separate Bordscheibe, deren zusätzliche Montage an diesem Lagerring sowie die erforderliche Präzisionsfertigung der Anlageflächen an diesen und dem zugehörigen Lagerring ungünstig auf deren Herstellungskosten aus. Außerdem besteht bei diesen Schrägrollenlagern die Gefahr, dass die Befestigung der separaten Bordscheibe nicht ausreichend ist, um auch hohen radialen oder axialen Belastungsspitzen standzuhalten, so dass sich die Bordscheibe im Lagerbetrieb lösen kann und es letztendlich zum Lagerausfall kommt.

### Aufgabe der Erfindung

Ausgehend von den dargelegten Nachteilen der Lösungen des bekannten Standes der Technik liegt der Erfindung deshalb die Aufgabe zu Grunde, eine einfache und kostengünstige Montage eines insbesondere einreihigen Schrägrollenlagers mit jeweils laufbahnbegrenzenden Borden zu ermöglichen.

### Beschreibung der Erfindung

Erfindungsgemäß wird diese Aufgabe durch ein Verfahren mit den Merkmalen gemäß Anspruch 1 gelöst. Ferner wird die Aufgabe mit einer Vorrichtung gemäß Anspruch 4 gelöst. Vorteilhafte Weiterbildungen der Erfindung sind den jeweils abhängigen Patentansprüchen zu entnehmen

Mit der erfindungsgemäßen Verfahren montierte Schrägrollenlager zeichnen sich dadurch aus, dass eine Tangente an die äußere Mantelfläche des inneren Lagerrings und eine Tangente an die die innere Mantelfläche des äußeren Lagerrings zumindest im Bereich der Laufbahnen gegensinnig schräg zur Lagerrotationsachse verlaufend eben ausgebildet und die Laufbahnen beider Lagerringe jeweils kegelförmig in diese Mantelflächen eingearbeitet sind und dass die dabei entstehenden und die Laufbahnen jeweils einseitig begrenzenden Borde dadurch jeweils einteilig mit den Lagerringen ausgebildet sind.

Bevorzugt ist vorgesehen, dass die Rollenwälzkörper bevorzugt als Kegelrollen ausgebildet sind, die einen Kegelwinkel im Bereich von 2° bis 6° aufweisen und in einem Hüllkreiswinkel zwischen 7° bis 20° auf ihren Laufbahnen abrollen. Bei Anwendung des Schrägrollenlagers als Festlager zur Lagerung der Hauptwelle in einem Kraftfahrzeug-Getriebe haben sich dabei aufgrund der auftretenden Radial- und Axiallasten ein Kegelwinkel zwischen 3° und 5°, bevorzugt jedoch von 4°, und ein Hüllkreiswinkel zwischen 12° und 16°, bevorzugt jedoch von 14°, als besonders geeignet erwiesen. Es ist jedoch anzumerken, dass die erfindungsgemäße Ausbildung nicht auf ein Kegelrollenlager beschränkt sein soll, da in gleicher Weise auch andere Rollenlager mit schräg zur Lagermittelachse angeordneten Rollenachsen derart ausgebildet werden können. So können anstelle der beispielhaft angeführten Kegelrollen auch Zylinderrollen oder Nadeln oder Rollen mit sphärischen Mantelflächen, wie Pendel- oder Tonnenrollen, verwendet werden.

Ferner ist es vorteilhaft, dass der an der kleineren Durchmesserseite der Rollenwälzkörper bestehende Spalt zwischen den Lagerringen kleiner als der an der größeren Durchmesserseite der Rollenwälzkörper bestehende Spalt zwischen den Lagerringen ausgebildet und so bemessen ist, dass das zweifache seines Maßes größer als der größte Durchmesser der Rollenwälzkörper ist. Eine solche Dimensionierung des Spaltes zwischen dem inneren und dem äußeren Lagerring ist notwendig, um das Einsetzen der Rollenwälzkörper in das Schrägrollenlager nach dem beschriebenen Montageverfahren zu ermöglichen.

Darüber hinaus ist es vorteilhaft, dass der die Laufbahn im inneren Lagerring begrenzende Bord eine Mindesthöhe zwischen 31% und 35%, bevorzugt von ca. 33%, und der die Laufbahn im äußeren Lagerring begrenzende Bord eine Mindesthöhe zwischen 19% und 23%, bevorzugt von ca. 21%, des größten Durchmessers der Rollenwälzkörper aufweist. Durch eine solche Ausbildung der Borde und der damit einhergehenden Laufbahntiefe ist gewährleistet, dass im Lagerbetrieb auftretende hohe Axialkräfte in die eine Richtung mit möglichst geringer Bordreibung aufgenommen werden können, während geringere Axialkräfte in die andere Richtung über die schrägen Laufbahnen aufgenommen werden.

Ferner ist es vorteilhaft, wenn nach der Montage der Rollenwälzkörper ein aus einem Käfigring sowie aus einer Vielzahl von axialen Käfigstegen bestehender Kammkäfig in das Schrägrollenlagereingesetzt wird. Dieser Lagerkäfig weist an seinen Käfigstegen zusätzlich mehrere gleichmäßig umfangsverteilte und einen kleineren Innendurchmesser als der Käfigring aufweisende Rastnasen auf, durch die der Lagerkäfig an der Innenfläche des Bordes am inneren Lagerring axial lagefixierbar ist. Diese Rastnasen werden beim Einsetzen des Lagerkäfigs in das Schrägrollenlager zunächst solange elastisch in Richtung der Käfigstege verformt, bis diese beim Einsetzen des Lagerkäfigs von der kleinen Durchmesserseite der Kegelrollen her hinter den Bord am inneren Lagerring einrasten. Dadurch wird der durch das Anliegen des Lagerkäfigs an den einen Stirnseiten der Rollenwälzkörper bisher nur in die eine Axialrichtung lagefixierte Lagerkäfig auch in die andere Axialrichtung lagefixiert. Auch hier ist jedoch zu bemerken, dass die Verwendung eines Kammkäfigs als Lagerkäfig nicht auf diese Käfigart beschränkt ist, da es auch möglich ist, den Lagerkäfig als zweiteiligen Blechnietkäfig auszubilden.

Erfindungsgemäß wird die gestellte Aufgabe durch ein Verfahren zu Montage eines Schrägrollenlagers nach Anspruch 1 gelöst, welches sich dadurch auszeichnet, dass das Schrägrollenlager nach einem dem für Rillenkugellager bekannten Exzentermontageverfahren entlehnten Exzenter-Schwenk-Montageverfahren montiert wird.

Bei diesem Exzenter-Schwenk-Montageverfahrens wird dabei in einem ersten Schritt der äußere Lagerring in zumindest annähernd senkrechter Stellung mit seiner bordlos ausgebildeten Stirnseite voran in eine Aufnahme eingelegt und durch Verspannen an einer 12-Uhr-Linie an seiner Außenmantelfläche gegen eine 6-Uhr-Linie an seiner Außenmantelfläche innerhalb seiner Elastizitätsgrenze geringfügig ovalisiert.

Danach werden in einem zweiten Schritt die Rollenwälzkörper entweder einzeln oder als in einer Hilfsvorrichtung bereits hufeisenförmig vorfixierter Rollensatz mit ihren größeren Stirnseiten voran von der bordlos ausgebildeten Stirnseite des äußeren Lagerrings her in die Laufbahn des äußeren Lagerrings eingefüllt.

Als dritter Schritt wird dann der innere Lagerring mit seiner bordlos ausgebildeten Stirnseite auf einer geneigten Ebene aufliegend dem äußeren Lagerring derart selbsttätig gleitend zugeführt, dass dieser mit zwei gegenüberliegenden Punkten seiner Laufbahn an zwei Anschlagpunkten an den Laufflächen zweier Rollenwälzkörper anschlägt.

In einem vierten Schritt wird dann der innere Lagerring durch eine aus seiner Beschleunigung auf geneigten Ebene resultierende Fliehkraft um eine zwischen seinen Anschlagpunkten an den Rollenwälzkörpern gebildete Horizontalachse in den äußeren Lagerring in eine senkrechte Stellung zu diesem geschwenkt, bei der der Bord des inneren Lagerrings zumindest abschnittsweise an den kleineren Stirnseiten der Rollenwälzkörper anliegt.

Anschließend werden in einem fünften Schritt der innere Lagerring in eine koaxiale Lage zum äußeren Lagerring verschoben und die Rollenwälzkörper in ihren Laufbahnen in den Lagerringen unter Aufhebung der Ovalisierung des äußeren Lagerrings gleichmäßig umfangsverteilt.

Danach wird gemäß Anspruch 2 in einem sechsten Schritt der als Kammkäfig ausgebildete Lagerkäfig mit seinen Käfigstegen zwischen die Rollenwälzkörper entweder von der Seite mit deren kleineren Stirnseiten her eingeführt und an der Innenfläche des Bordes am inneren Lagerring verrastet oder gemäß Anspruch 3 von der Seite mit deren größeren Stirnseiten her eingeführt und an der Innenfläche des Bordes am äußeren Lagerrings verrastet. Schließlich wird die gestellte Aufgabe auch durch eine Vorrichtung zur Durchführung des beschriebenen Exzenter-Schwenk-Montageverfahrens nach Anspruch 4 gelöst.

Demnach wird vorgeschlagen, dass die Montagevorrichtung im Wesentlichen aus einem senkrechten Aufnahmeteil zur Halterung des äußeren Lagerrings sowie zu dessen Befüllung mit den Rollenwälzkörpern und aus einem gegenüber dem Aufnahmeteil und zu diesem geneigt angeordneten Rampenteil zur Zuführung des inneren Lagerrings zum äußeren Lagerring besteht.

In konkreter Ausgestaltung weist dabei das Aufnahmeteil einen L-förmigen Profilquerschnitt mit einem waagerechten oder nahezu waagerechten Schenkel und einem senkrechten oder nahezu senkrechten Schenkel auf.

Die erfindungsgemäß ausgebildete Montagevorrichtung zeichnet sich darüber hinaus noch dadurch aus, dass die Oberfläche des waagerechten Schenkels mit einer zum senkrechten Schenkel verlaufenden konkaven Ausformung zur stehenden Aufnahme eines losen Halteringes für den äußeren Lagerring ausgebildet ist. Gemäß Anspruch 5 ist der senkrechte Schenkel mit einem kreisförmigen Durchbruch mit zumindest annähernd der Größe des Innendurchmessers des äußeren Lagerrings ausgebildet, durch den hindurch die Rollenwälzkörper in die Laufbahn des äußeren Lagerrings einführbar sind. Eine zweckmäßige Weiterbildung der erfindungsgemäßen Montagevorrichtung ist nach Anspruch 6 des Weiteren, dass in dem Durchbruch des senkrechten Schenkels zwei etwa um 190° versetzt zueinander angeordnete und in den losen Haltering hineinragende Anschlagstege befestigt sind, zwischen denen der dem äußeren Lagerring zugeführte Rollensatz in diesem lagefixierbar ist.

Nach Anspruch 7 ist ein weiteres Merkmal der erfindungsgemäßen Montagevorrichtung, dass am freien Ende des senkrechten Schenkels in Höhe der 12-Uhr-Linie der Mantelfläche des losen Halteringes eine Einrichtung zur Erzeugung einer senkrechten Druckkraft zur Ovalisierung des äußeren Lagerringes befestigt ist. Als besonders geeignet hat sich dabei beispielsweise eine mit einem Innengewinde ausgebildete Hülse erwiesen, in der eine Stellschraube drehbeweglich angeordnet ist.

Schließlich wird durch die Ansprüche 8 und 9 noch vorgeschlagen, dass das Rampenteil der Montagevorrichtung eine geneigte ebene Gleitbahn mit zwei seitlichen Führungsborden aufweist, deren Abstand zueinander etwa dem Außendurchmesser des inneren Lagerrings entspricht. Dies hat sich als vorteilhaft erwiesen, um den inneren Lagerring exakt in den Innendurchmesser des äußeren Lagerrings eingleiten zu lassen. Das halteringseitige Ende der Gleitbahn ist dabei auf zwei Lagerböcken befestigt, die über eine Stiftverbindung auf der

Oberfläche des waagerechten Schenkels des Aufnahmeteils derart fixierbar sind, dass die Gleitbahn mit diesen Lagerböcken vom Aufnahmeteil abnehmbar ist. Zusammenfassend weist das erfindungsgemäß montierte Schrägrollenlager somit gegenüber den aus dem Stand der Technik bekannten Schrägrollenlagern den Vorteil auf, dass es trotz des mit dem Exzenter-Schwenk-Montageverfahren maximal erreichbaren Wälzkörperfüllgrades von ca. 60 % eine höhere Tragfähigkeit als ein gleichartig montiertes einreihiges Rillenkugellager aufweist, da die verwendeten Rollenwälzkörper nicht mehr wie bei Lagerkugeln im Punktkontakt sondern im Linienkontakt zu ihren Laufbahnen stehen. Hinsichtlich der erreichbaren Tragfähigkeit reiht sich dabei ein erfindungsgemäß ausgebildetes Schrägrollenlager als komplett neuer Lagertyp [z. B. Baureihe ARU (Angular Roller Unit) 207 = 40 kN] etwa in der Mitte zwischen der Tragfähigkeit eines einreihigen Rillenkugellagers [z. B. Baureihe 6207 = 25,5 kN] und der Tragfähigkeit eines einreihigen Zylinderrollenlagers [z. B. Baureihe NUP 207E = 56 kN] ein. Darüber hinaus sind durch die einteilig mit den Lagerringen ausgebildeten Borde keine separaten Bordscheiben mehr notwendig, so sich das erfindungsgemäß montierte Schrägrollenlager insgesamt durch einen niedrigen Montageaufwand und damit durch geringe Gesamtkosten für die Lagerfertigung auszeichnet.

### Kurze Beschreibung der Zeichnungen

Eine bevorzugte Ausführungsform eines Schrägrollenlagers sowie ein Verfahren zu dessen Montage und eine Vorrichtung zur Durchführung dieses Verfahrens werden nachfolgend unter Bezugnahme auf die beigefügten Zeichnungen näher erläutert. Dabei zeigen:
- Figur 1: eine vergrößerte Darstellung eines Querschnittes durch ein einreihiges Schrägrollenlager mit einteilig mit den Lagerringen ausgebildeten Borden;
- Figur 2a, 2b: eine dreidimensionale Darstellung des ersten Schrittes des erfindungsgemäßen Montageverfahrens in einer Draufsicht und einer Schnittansicht;
- Figur 3a, 3b: eine dreidimensionale Darstellung des zweiten Schrittes des erfindungsgemäßen Montageverfahrens in einer Draufsicht und einer Schnittansicht;
- Figur 4a, 4b: eine dreidimensionale Darstellung des dritten Schrittes des erfindungsgemäßen Montageverfahrens in einer Draufsicht und einer Schnittansicht;
- Figur 5a, 5b: eine dreidimensionale Darstellung des vierten Schrittes des erfindungsgemäßen Montageverfahrens in einer Draufsicht und einer Schnittansicht;
- Figur 6a, 6b: eine dreidimensionale Darstellung des fünften Schrittes des erfindungsgemäßen Montageverfahrens in einer Draufsicht und einer Schnittansicht;
- Figur 7a, 7b: eine dreidimensionale Darstellung des sechsten Schrittes des erfindungsgemäßen Montageverfahrens in einer Draufsicht und einer Schnittansicht;
- Figur 8: eine dreidimensionale Darstellung einer Vorrichtung zur Durchführung des erfindungsgemäßen Montageverfahrens in einer Draufsicht.

### Ausführliche Beschreibung der Zeichnungen

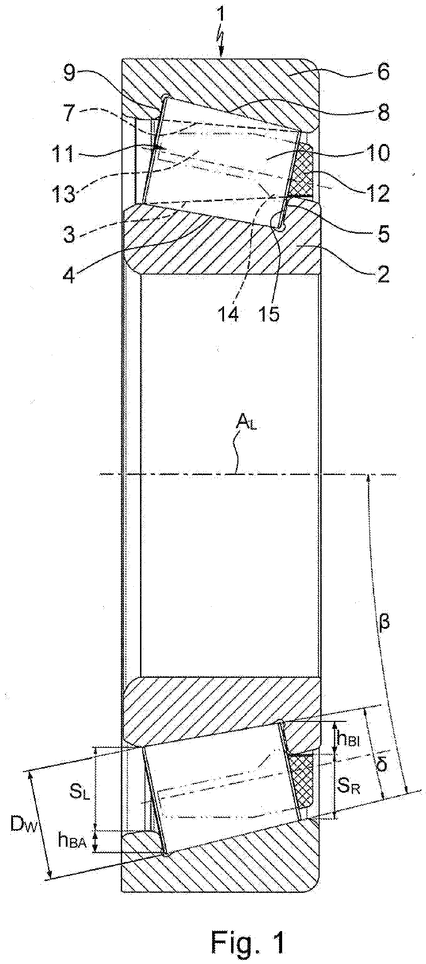

In Figur 1 ist ein Querschnitt eines einreihigen Schrägrollenlagers 1 dargestellt, welches beispielsweise als Ersatz des bisher verwendeten Rillenkugellagers zur Lagerung der Kurbelwelle in Kraftfahrzeug-Verbrennungsmotoren geeignet ist. Deutlich sichtbar besteht dieses Schrägrollenlager 1 aus einem inneren Lagerring 2 mit einer an dessen äußerer Mantelfläche geneigt zur Lagermittelachse A_{L} angeordneten inneren Laufbahn 4, die an ihrem kleinsten Durchmesser durch einen Bord 5 begrenzt wird, sowie aus einem äußeren Lagerring 6 mit einer an dessen innerer Mantelfläche ebenfalls geneigt zur Lagerrotationsachse A_{L} angeordneten äußeren Laufbahn 8, die an ihrem größten Durchmesser durch einen Bord 9 begrenzt wird. Zwischen den Lagerringen 2, 6 ist darüber hinaus eine Vielzahl auf deren Laufbahnen 4, 8 abrollender Rollenwälzkörper 10 angeordnet, die in Umfangsrichtung durch einen Lagerkäfig 11 in gleichmäßigen Abständen zueinander gehalten werden.

Desweiteren ist in Figur 1 zu sehen, dass eine Tangente 3 an die äußere Mantelfläche des inneren Lagerrings 2 und eine Tangente 7 an die die innere Mantelfläche des äußeren Lagerrings 6 zumindest im Bereich der Laufbahnen 4, 8 gegensinnig schräg zur Lagermittelachse A_{L} verlaufend eben ausgebildet und die Laufbahnen 4, 8 beider Lagerringe 2, 6 jeweils kegelförmig in diese Mantelflächen eingearbeitet sind. Die dabei entstehenden und die Laufbahnen 4, 8 jeweils einseitig begrenzenden Borde 5, 9 sind dadurch jeweils einteilig mit den Lagerringen 2, 6 ausgebildet.

Ebenso ist aus Figur 1 ersichtlich, dass die Rollenwälzkörper 10 als Kegelrollen ausgebildet sind, die einen Kegelwinkel δ von bevorzugt 4° aufweisen und in einem Hüllkreiswinkel β von bevorzugt 14° auf ihren Laufbahnen 4, 8 abrollen. Außerdem ist der an der kleineren Durchmesserseite der Rollenwälzkörper 10 bestehende Spalt S_{R} zwischen den Lagerringen 2, 4 kleiner als der an der größeren Durchmesserseite der Rollenwälzkörper 10 bestehende Spalt S_{L} zwischen den Lagerringen 2, 4 ausgebildet und so bemessen, dass das zweifache seines Maßes größer als der größte Durchmesser Dw der Rollenwälzkörper 10 ist, um das Einsetzen der Rollenwälzkörper 10 in das Schrägrollenlager 1 nach dem nachfolgend näher beschriebenen Montageverfahren zu ermöglichen. Zusätzlich weist der die Laufbahn 4 im inneren Lagerring 2 begrenzende Bord 5 eine Mindesthöhe h_{BI} von ca. 33% und der die Laufbahn 8 im äußeren Lagerring 6 begrenzende Bord 9 eine Mindesthöhe h_{BA} von ca. 21% des größten Durchmessers D_{W} der Rollenwälzkörper 10 auf, um im Lagerbetrieb auftretende hohe Axialkräfte in die eine Richtung mit möglichst geringer Bordreibung aufnehmen zu können.

Schließlich ist in Figur 1 noch erkennbar, dass der Lagerkäfig 11 bevorzugt durch einen nach der Montage der Rollenwälzkörper 10 in das Radialwälzlager 1 einsetzbaren Kammkäfig gebildet wird. Der aus einem Käfigring 12 sowie aus einer Vielzahl von axialen Käfigstegen 13 bestehende Lagerkäfig 11 weist dabei an seinen verdeckt dargestellten Käfigstegen 13 mehrere ebenfalls verdeckt dargestellte, gleichmäßig umfangsverteilte und einen kleineren Innendurchmesser als der Käfigring 12 aufweisende Rastnasen 14 auf, durch die der Lagerkäfig 11 an der Innenfläche 15 des Bordes 5 am inneren Lagerring 2 axial lagefixierbar ist.

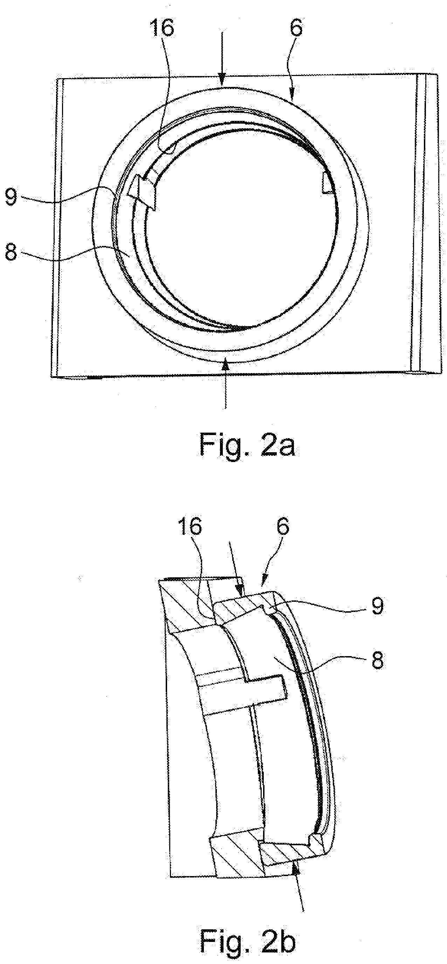

In den Figuren 2a bis 7b sind desweiteren die einzelnen Schritte eines Montageverfahrens für das erfindungsgemäße Schrägrollenlager 1 schematisch dargestellt. Dieses Montageverfahren ist im Wesentlichen ein dem für Rillenkugellager bekannten Exzentermontageverfahren entlehntes Exzenter-Schwenk-Montageverfahren, bei dem, wie in den Figuren 2a und 2b zu sehen ist, in einem ersten Schritt der äußere Lagerring 6 in zumindest annähernd senkrechter Stellung mit seiner bordlos ausgebildeten Stirnseite 16 voran in eine Aufnahme eingelegt und durch Verspannen an einer in der Zeichnung durch einen Pfeil gekennzeichneten 12-Uhr-Linie an seiner Außenmantelfläche 17 gegen eine ebenfalls durch einen Pfeil gekennzeichneten 6-Uhr-Linie an seiner Außenmantelfläche 17 innerhalb seiner Elastizitätsgrenze geringfügig ovalisiert wird.

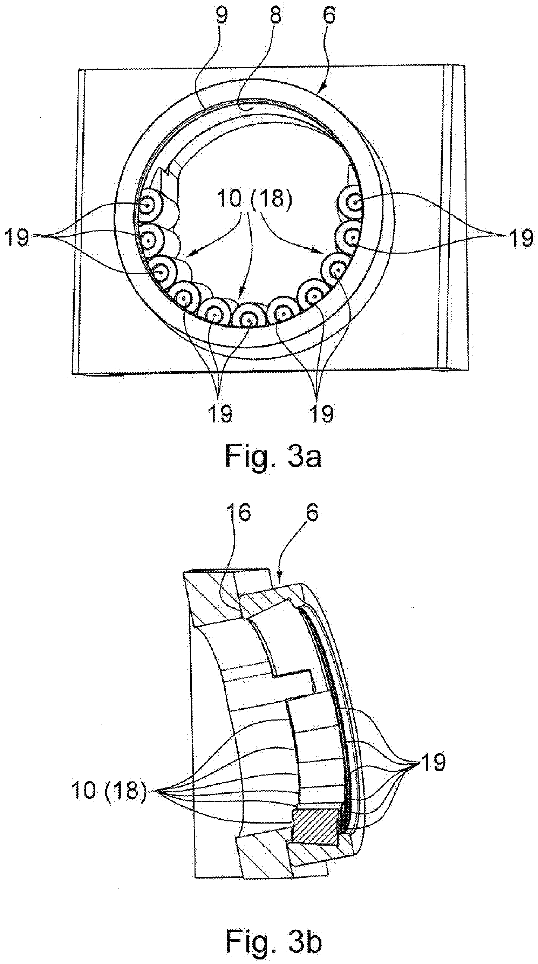

Danach werden in einem in den Figuren 3a und 3b abgebildeten zweiten Schritt die Rollenwälzkörper 10 entweder einzeln oder als in einer nicht dargestellten Hilfsvorrichtung bereits hufeisenförmig vorfixierter Rollensatz 18 mit ihren größeren Stirnseiten 19 voran von der bordlos ausgebildeten Stirnseite 16 des äußeren Lagerrings 6 her in die Laufbahn 8 des äußeren Lagerrings 6 eingefüllt.

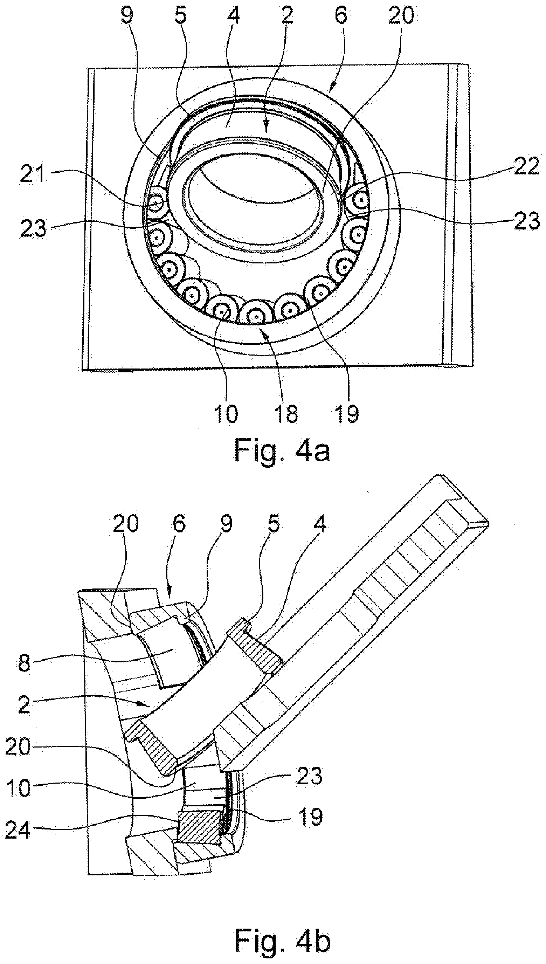

In einem dritten, aus den Figuren 4a und 4b ersichtlichen Schritt wird dann der innere Lagerring 2 mit seiner bordlos ausgebildeten Stirnseite 20 auf einer geneigten Ebene aufliegend dem äußeren Lagerring 6 derart selbsttätig gleitend zugeführt, dass dieser mit zwei gegenüberliegenden Punkten seiner Laufbahn 4 an zwei Anschlagpunkten 21, 22 an den Laufflächen 23 zweier Rollenwälzkörper 10 anschlägt.

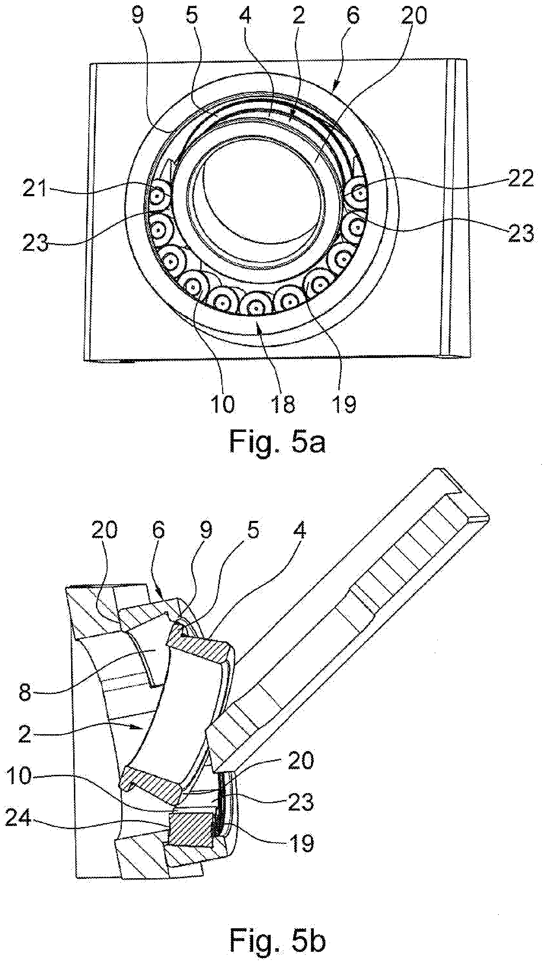

Als vierter, in den Figuren 5a und 5b gezeigter Schritt wird danach der innere Lagerring 2 durch eine aus seiner Beschleunigung auf geneigten Ebene resultierende Fliehkraft um eine zwischen seinen Anschlagpunkten 21, 22 an den Rollenwälzkörpern 10 gebildete Horizontalachse in den äußeren Lagerring 6 in eine senkrechte Stellung zu diesem schwenkt, bei der der Bord 5 des inneren Lagerrings 2 zumindest abschnittsweise an den kleineren Stirnseiten 24 der Rollenwälzkörper 10 anliegt.

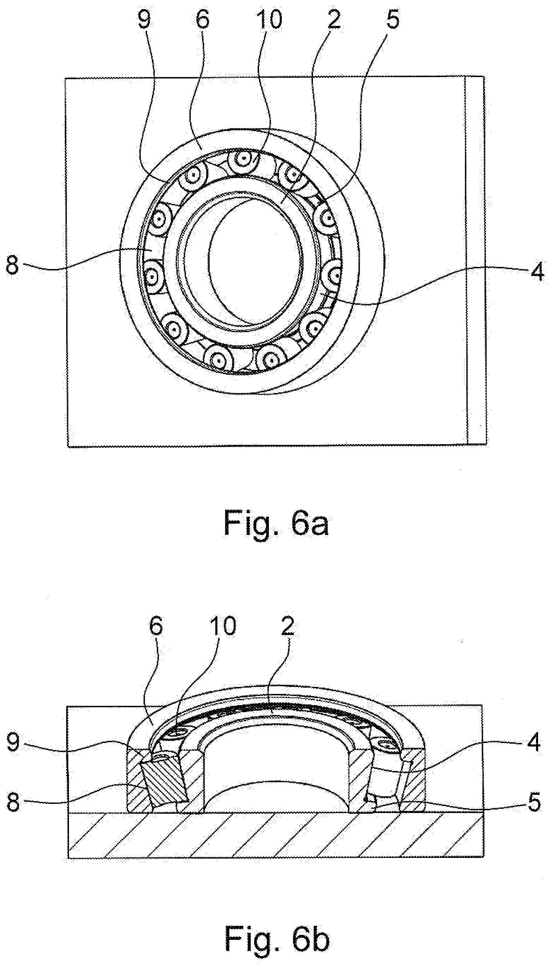

Anschließend wird, wie aus den Figuren 6a und 6b ersichtlich ist, in einem fünften Schritt der innere Lagerring 2 in eine koaxiale Lage zum äußeren Lagerring 3 verschoben, um die Rollenwälzkörper 10 in den Lagerringen 2, 6 unter Aufhebung der Ovalisierung des äußeren Lagerrings 3 gleichmäßig umfangsverteilt in ihren Laufbahnen 4, 8 anzuordnen.

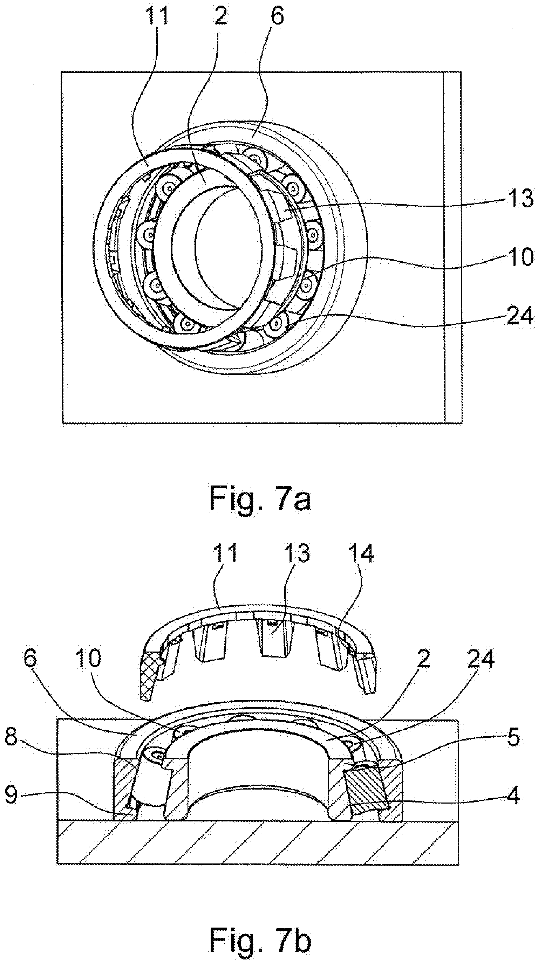

Danach wird in einem sechsten Schritt der Lagerkäfig 11, wie in den Figuren 7a und 7b abgebildet, mit seinen Käfigstegen 13 zwischen die Rollenwälzkörper 10 von der Seite mit deren kleineren Stirnseiten her eingeführt und, wie in Figur 1 gezeigt, mit seinen Rastnasen 14 an der Innenfläche 15 des Bordes 5 am inneren Lagerring 2 verrastet. Eine aus Gründen der Vereinfachung in den Zeichnungen nicht dargestellte Variante hierzu wäre es, den als Kammkäfig ausgebildeten Lagerkäfig 11 mit seinen Käfigstegen 13 zwischen die Rollenwälzkörper 10 von der Seite mit deren größeren Stirnseiten her einzuführen und mit Raststegen an der Innenfläche des Bordes 9 am äußeren Lagerring 6 zu verrasten.

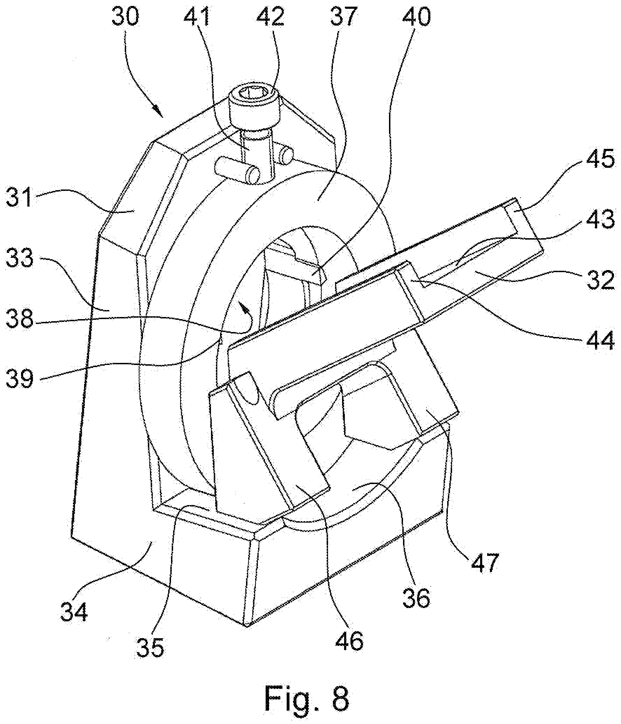

In den Figur 8 ist schließlich noch die Montagevorrichtung 30 Durchführung des erfindungsgemäßen Exzenter-Schwenk-Montageverfahrens dargestellt. Diese Montagevorrichtung 30 besteht deutlich sichtbar im Wesentlichen aus einem senkrechten Aufnahmeteil 31 zur Halterung des äußeren Lagerrings 6 und zu dessen Befüllung mit den Rollenwälzkörpern 10 sowie aus einem gegenüber

dem Aufnahmeteil 31 und zu diesem geneigt angeordneten Rampenteil 32, über welches der innere Lagerrings 2 dem äußeren Lagerring 6 zugeführt wird.

Desweiteren ist in Figur 8 zu sehen, dass das Aufnahmeteil 31 einen L-förmigen Profilquerschnitt mit einem waagerechten oder nahezu waagerechten Schenkel 34 und einem senkrechten oder nahezu senkrechten Schenkel 33 aufweist. Die Oberfläche 35 des waagerechten Schenkels 34 ist dabei mit einer zum senkrechten Schenkel 33 verlaufenden konkaven Ausformung 36 zur stehenden Aufnahme eines losen Halteringes 37 für den äußeren Lagerring 6 ausgebildet während der senkrechte Schenkel 33 mit einem kreisförmigen Durchbruch 38 mit zumindest annähernd der Größe des Innendurchmessers des äußeren Lagerrings 6 ausgebildet ist, durch den hindurch die Rollenwälzkörper 10 in die Laufbahn 8 des äußeren Lagerrings 6 einführbar sind.

Darüber hinaus ist aus Figur 8 ersichtlich, dass in dem Durchbruch 38 des senkrechten Schenkels 33 zwei etwa um 190° versetzt zueinander angeordnete und in den losen Haltering 37 hineinragende Anschlagstege 39, 40 befestigt sind, zwischen denen der dem äußeren Lagerring 6 zugeführte Rollensatz 18 in diesem lagefixierbar ist.

Ebenso ist in Figur 8 deutlich erkennbar, dass am freien Ende des senkrechten Schenkels 33 in Höhe der 12-Uhr-Linie der Mantelfläche des losen Halteringes 37 eine Einrichtung zur Erzeugung einer senkrechten Druckkraft zur Ovalisierung des äußeren Lagerringes 6 befestigt ist, die als eine mit einem Innengewinde ausgebildete Hülse 41 ausgebildet ist, in der eine Stellschraube 42 drehbeweglich angeordnet ist.

Schließlich geht aus Figur 8 noch hervor. dass das Rampenteil 32 der Montagevorrichtung 30 eine geneigte ebene Gleitbahn 43 mit zwei seitlichen Führungsborden 44, 45 aufweist, deren Abstand zueinander etwa dem Außendurchmesser des inneren Lagerrings 2 entspricht. Das halteringseitige Ende der Gleitbahn 43 ist dabei auf zwei Lagerböcken 46, 47 befestigt, die über eine Stiftverbindung auf der Oberfläche 35 des waagerechten Schenkels 34 des Aufnahmeteils 31 derart fixierbar sind, dass die Gleitbahn 43 mit diesen Lagerböcken 46, 47 vom Aufnahmeteil 31 abnehmbar ist.

**Bezugszahlenliste**

| | | | |
|---|---|---|---|
| 1 | Schrägrollenlager | 34 | waagerechter Schenkel von 31 |
| 2 | innerer Lagerring | 35 | Oberfläche von 34 |
| 3 | Tangente an die äußere Mantelfläche von 2 | 36 | konkave Ausformung in 35 |
| | | 37 | Haltering von 31 |
| 4 | innere Laufbahn in 2 | 38 | Durchbruch in 33 |
| 5 | Bord an 4 | 39 | Anschlagsteg in 38 |
| 6 | äußerer Lagerring | 40 | Anschlagsteg in 38 |
| 7 | Tangente an die innere Mantelfläche von 6 | 41 | Hülse an 33 |
| | | 42 | Stellschraube in 41 |
| 8 | äußere Laufbahn in 6 | 43 | Gleitbahn von 32 |
| 9 | Bord an 8 | 44 | Führungsbord an 43 |
| 10 | Rollenwälzkörper | 45 | Führungsbord an 43 |
| 11 | Lagerkäfig | 41 | Lagerbock an 43 |
| 12 | Käfigring von 11 | 42 | Lagerbock an 43 |
| 13 | Käfigstege an 12 | A_{L} | Lagermittelachse Lagerrotationsachse |
| 14 | Rastnasen an 13 | δ | Kegelwinkel |
| 15 | Innenfläche von 5 | β | Hüllkreiswinkel |
| 16 | bordlose Stirnseite von 6 | S_{L} | linker Spalt zwischen 2 und 6 |
| 17 | Außenmantelfläche von 6 | S_{R} | rechter Spalt zwischen 2 und 6 |
| 18 | Rollensatz | D_{W} | größter Durchmesser von 10 |
| 19 | größere Stirnseiten von 10 | h_{BI} | Bordhöhe an 2 |
| 20 | bordlose Stirnseite von 2 | h_{BA} | Bordhöhe an 6 |
| 21 | Anschlagpunkt an 23 | | |
| 22 | Anschlagpunkt an 23 | | |
| 23 | Lauffläche von 10 | | |
| 24 | kleinere Stirnseite von 10 | | |
| 30 | Montagevorrichtung | | |
| 31 | Aufnahmeteil von 30 | | |
| 32 | Rampenteil von 30 | | |
| 33 | senkrechter Schenkel von 31 | | |

## Patentansprüche

1. Verfahren zur Montage eines Schrägrollenlagers (1), umfassend einen inneren Lagerring (2) mit einer an dessen äußerer Mantelfläche (3) schräg zur Lagerrotationsachse (A_{L}) angeordneten inneren Laufbahn (4) und einen diese Laufbahn (4) an ihrem kleinsten Durchmesser begrenzenden Bord (5), einen äußeren Lagerring (6) mit einer an dessen innerer Mantelfläche (7) ebenfalls schräg zur Lagermittelachse (A_{L}) angeordneten äußeren Laufbahn (8) und einem diese Laufbahn (8) an ihrem größten Durchmesser begrenzenden Bord (9) sowie aus einer Vielzahl zwischen den Lagerringen (2, 6) angeordneter und auf deren Laufbahnen (4, 8) abrollender Rollenwälzkörper (10), die in Umfangsrichtung durch einen Lagerkäfig (11) in gleichmäßigen Abständen zueinander gehalten werden, wobei eine Tangente (3) an die äußere Mantelfläche des inneren Lagerrings (2) und eine Tangente (7) an die die innere Mantelfläche des äußeren Lagerrings (6) zumindest im Bereich der Laufbahnen (4, 8) gegensinnig schräg zur Lagerrotationsachse (A_{L}) verlaufend eben ausgebildet und die Laufbahnen (4, 8) beider Lagerringe (2, 6) jeweils kegelförmig in diese Mantelflächen eingearbeitet sind, so dass die dabei entstehenden und die Laufbahnen (4, 8) jeweils einseitig begrenzenden Borde (5, 9) dadurch jeweils einteilig mit den Lagerringen (2, 6) ausgebildet sind, **dadurch gekennzeichnet, dass** das Schrägrollenlager (1) nach einem dem für Rillenkugellager bekannten Exzentermontageverfahren entlehnten Exzenter-Schwenk-Montageverfahren montiert wird:
a) in einem ersten Schritt wird der äußere Lagerring (6) in zumindest annähernd senkrechter Stellung mit seiner bordlos ausgebildeten Stirnseite (16) voran in eine Aufnahme eingelegt und durch Verspannen an einer 12-Uhr-Linie an seiner Außenmantelfläche (17) gegen eine 6-Uhr-Linie an seiner Außenmantelfläche (17) innerhalb seiner Elastizitätsgrenze geringfügig ovalisiert.
b) in einem zweiten Schritt werden die Rollenwälzkörper (10) entweder einzeln oder als in einer Hilfsvorrichtung bereits hufeisenförmig vorfixierter Rollensatz (18) mit ihren größeren Stirnseiten (19) voran von der bordlos ausgebildeten Stirnseite (16) des äußeren Lagerrings (6) her in die Laufbahn (8) des äußeren Lagerrings (6) eingefüllt.
c) in einem dritten Schritt wird der innere Lagerring (2) mit seiner bordlos ausgebildeten Stirnseite (20) auf einer geneigten Ebene aufliegend dem äußeren Lagerring (6) derart selbsttätig gleitend zugeführt, dass dieser mit zwei gegenüberliegenden Punkten seiner Laufbahn (4) an zwei Anschlagpunkten (21, 22) an den Laufflächen (23) zweier Rollenwälzkörper (10) anschlägt.
d) in einem vierten Schritt schwenkt der innere Lagerring (2) durch eine aus seiner Beschleunigung auf geneigten Ebene resultierende Fliehkraft um eine zwischen seinen Anschlagpunkten (21, 22) an den Rollenwälzkörpern (10) gebildete Horizontalachse in den äußeren Lagerring (6) in eine senkrechte Stellung diesem, bei der der Bord (5) des inneren Lagerrings (2) zumindest abschnittsweise an den kleineren Stirnseiten (24) der Rollenwälzkörper (10) anliegt.
e) in einem fünften Schritt wird der innere Lagerring (2) in eine koaxiale Lage zum äußeren Lagerring (6) verschoben und die Rollenwälzkörper (10) in ihren Laufbahnen (4, 8) in den Lagerringen (2, 6) unter Aufhebung der Ovalisierung des äußeren Lagerrings (3) gleichmäßig umfangsverteilt werden.

2. Verfahren nach Anspruch 1, **dadurch gekennzeichnet, dass** in einem sechsten Schritt der als Kammkäfig ausgebildete Lagerkäfig (11) mit seinen Käfigstegen (13) zwischen die Rollenwälzkörper (10) von der Seite mit deren kleineren Stirnseiten (24) her eingeführt und mit seinen Rastnasen (14) an der Innenfläche (15) des Bordes (5) am inneren Lagerring (2) verrastet wird.

3. Verfahren nach Anspruch 1, **dadurch gekennzeichnet, dass** in einem sechsten Schritt der als Kammkäfig ausgebildete Lagerkäfig (11) mit seinen Käfigstegen (13) zwischen die Rollenwälzkörper (10) von der Seite mit deren größeren Stirnseiten (19) her eingeführt und mit seinen Raststegen an der Innenfläche des Bordes (9) am äußeren Lagerrings (6) verrastet wird.

4. Montagevorrichtung (30) zur Durchführung des Verfahrens nach wenigstens einem der Ansprüche 1 bis 3, umfassend ein senkrechtes Aufnahmeteil (31) zur Halterung des äußeren Lagerrings (6) sowie zu dessen Befüllung mit den Rollenwälzkörpern (10) und ein gegenüber dem Aufnahmeteil (31) und zu diesem geneigt angeordnetes Rampenteil (32) zur Zuführung des inneren Lagerrings (2) zum äußeren Lagerring (6), wobei das Aufnahmeteil (31) einen L-förmigen Profilquerschnitt mit einem waagerechten oder nahezu waagerechten Schenkel (34) und einem senkrechten oder nahezu senkrechten Schenkel (33) aufweist, **dadurch gekennzeichnet, dass** eine Oberfläche (35) des waagerechten Schenkels (34) mit einer zum senkrechten Schenkel (33) verlaufenden konkaven Ausformung (36) zur stehenden Aufnahme eines losen Halteringes (37) für den äußeren Lagerring (6) ausgebildet ist.

5. Montagevorrichtung (30) nach Anspruch 4, **dadurch gekennzeichnet, dass** der senkrechte Schenkel (33) mit einem kreisförmigen Durchbruch (38) mit zumindest annähernd der Größe des Innendurchmessers des äußeren Lagerrings (6) ausgebildet ist, durch den hindurch die Rollenwälzkörper (10) in die Laufbahn (8) des äußeren Lagerrings (6) einführbar sind.

6. Montagevorrichtung (30) nach Anspruch 5, **dadurch gekennzeichnet, dass** in dem Durchbruch (38) des senkrechten Schenkels (33) zwei etwa um 190° versetzt zueinander angeordnete und in den losen Haltering (37) hineinragende Anschlagstege (39, 40) befestigt sind, zwischen denen der dem äußeren Lagerring (6) zugeführte Rollensatz (18) in diesem lagefixierbar ist.

7. Montagevorrichtung (30) nach Anspruch 6, **dadurch gekennzeichnet, dass** am freien Ende des senkrechten Schenkels (33) in Höhe der 12-Uhr-Linie der Mantelfläche des losen Halteringes (37) eine Einrichtung zur Erzeugung einer senkrechten Druckkraft zur Ovalisierung des äußeren Lagerringes (6) befestigt ist, beispielsweise eine mit einem Innengewinde ausgebildete Hülse (41), in der eine Stellschraube (42) drehbeweglich angeordnet ist.

8. Montagevorrichtung (30) nach Anspruch 7, **dadurch gekennzeichnet, dass** das Rampenteil (32) eine geneigte ebene Gleitbahn (43) mit zwei seitlichen Führungsborden (44, 45) aufweist, deren Abstand zueinander etwa dem Außendurchmesser des inneren Lagerrings (2) entspricht.

9. Montagevorrichtung (30) nach Anspruch 8, **dadurch gekennzeichnet, dass** das halteringseitige Ende der Gleitbahn (43) auf zwei Lagerböcken (46, 47) befestigt und die Gleitbahn (43) über diese Lagerböcke (46, 47) abnehmbar auf der Oberfläche (35) des waagerechten Schenkels (34) des Aufnahmeteils (31) fixierbar ist, beispielsweise über eine Stiftverbindung.

## Claims

1. A method for assembly of an angular contact roller bearing (1), comprising an inner bearing ring (2) having an inner raceway (4) arranged on the outer shell surface (3) of said inner bearing ring, at an angle to the bearing rotation axis (A_{L}) and a shelf (5) delimiting said raceway (4) at its smallest diameter, an outer bearing ring (6) having an outer raceway (8) arranged on the inner shell surface (7) of the outer bearing ring also at an angle to the central bearing axis (A_{L}) and a shelf (9) delimiting said raceway (8) at its largest diameter, and a plurality of rolling element bodies (10) arranged between the bearing rings (2, 6) and rolling on their raceways (4, 8), said rolling element bodies being held at regular distances from one another in the circumferential direction by a bearing cage (11), wherein a tangent (3) to the outer shell surface of the inner bearing ring (2) and a tangent (7) to the inner shell surface of the outer bearing ring (6) are designed, at least in the region of the raceways (4, 8), as a plane extending inversely at an angle to the bearing rotation axis (A_{L}) and the raceways (4, 8) of both bearing rings (2, 6) are each conically embedded in said shell surfaces, so that the resulting shelves (5,9) each delimiting the raceways (4, 8) on one side are thereby integrally formed with the bearing rings (2, 6), **characterised in that** the angular contact roller bearing (1) is assembled using an eccentric-swivel assembly method borrowed from the eccentric assembly method known for grooved ball bearings:
a) in a first step, the outer bearing ring (6) is placed in a receptacle in an at least approximately vertical position with its shelf-free front end face (16) facing forwards and is slightly ovalised within its elastic limit by tensioning at a 12 o'clock line on its outer shell surface (17) against a 6 o'clock line on its outer shell surface (17).
b) in a second step, the rolling elements (10) are poured, either individually or as a set of rollers (18) that has been pre-fixed in a horseshoe shape with their larger end faces (19) facing forwards from the shelf-free end face (16) of the outer bearing ring (6), into the raceway (8) of the outer bearing ring (6).
c) in a third step, the inner bearing ring (2), with its shelf-free end face (20) resting on an inclined plane, is automatically slidingly fed to the outer bearing ring (6) in such a way that said inner bearing ring strikes with two opposite points of its raceway (4) at two attachment points (21, 22) on the bearing surfaces (23) of two rolling element bodies (10).
d) in a fourth step, the inner bearing ring (2), as a result of the centrifugal force resulting from its acceleration on the inclined plane, swivels about a horizontal axis in the outer bearing ring (6) formed between its attachment points (21, 22) on the rolling element bodies (10) into a vertical position of said outer bearing ring, in which position the shelf (5) of the inner bearing ring (2) abuts at least in sections on the smaller end faces (24) of the rolling element bodies (10).
e) in a fifth step, the inner bearing ring (2) is displaced into a coaxial position with respect to the outer bearing ring (6) and the rolling element bodies (10) in the raceways (4, 8) thereof are distributed in the bearing rings (2, 6) in a uniform circumferential manner so as to cancel the ovalisation of the outer bearing ring (3).

2. The method according to claim 1, **characterised in that,** in a sixth step, the bearing cage (11) formed as a prong-type cage with the cage dividers (13) thereof is introduced between the rolling element bodies (10) from the side with the smaller end faces (24) thereof and being latched with the locking lugs (14) thereof on the inner surface (15) of the shelf (5) on the inner bearing ring (2).

3. The method according to claim 1, **characterised in that,** in a sixth step, the bearing cage (11) formed as a prong-type cage with the cage dividers (13) thereof is introduced between the rolling element bodies (10) from the side with the larger end faces (19) thereof and latched with the locking strips thereof on the inner surface of the shelf (9) on the outer bearing ring (6).

4. An assembly device (30) for performing the method according to at least one of claims 1 to 3, comprising a vertical receiving part (31) for holding the outer bearing ring (6) and for filling said outer bearing ring with the rolling element bodies (10) and a ramp part (32) arranged opposite the receiving part (31) and inclined thereto for feeding the inner bearing ring (2) to the outer bearing ring (6), wherein the receiving part (31) has an L-shaped profile cross section with a horizontal or almost horizontal leg (34) and a vertical or almost vertical leg (33), **characterised in that** a surface (35) of the horizontal leg (34) with a concave shape (36) extending to the vertical leg (33) is formed for vertically receiving a loose retaining ring (37) for the outer bearing ring (6).

5. The assembly device (30) according to claim 4, **characterised in that** the vertical leg (33) is formed with a circular aperture (38) with at least approximately the size of the inner diameter of the outer bearing ring (6), through which the rolling element bodies (10) can be inserted into the raceway (8) of the outer bearing ring (6).

6. The assembly device (30) according to claim 5, **characterised in that** two stop webs (39, 40) arranged at approximately 190° to one another and protruding into the loose retainer ring (37) are fastened in the aperture (38) of the vertical leg (33), between which stop webs the roller set (18) fed to the outer bearing ring (6) can be fixed in position in the same.

7. The assembly device (30) according to claim 6, **characterised in that,** at the free end of the vertical leg (33) on the 12 o'clock line of the shell surface of the loose retaining ring (37), a device for generating a vertical pressure force for ovalisation of the outer bearing ring (6) is fastened, for example a sleeve (41) formed with an internal thread, in which sleeve a set screw (42) is rotatably arranged.

8. The assembly device (30) according to claim 7, **characterised in that** the ramp part (32) has an inclined flat slideway (43) with two lateral guide shelves (44, 45), the spacing of which corresponds approximately to the outer diameter of the inner bearing ring (2).

9. The assembly device (30) according to claim 8, **characterised in that** the end of the slideway (43) on the retaining ring side is fastened to two bearing blocks (46, 47) and the slideway (43) can be removably fixed via these bearing blocks (46, 47) to the surface (35) of the horizontal leg (34) of the receiving part (31), for example via a pin connection.

## Revendications

1. Procédé pour le montage d'un roulement à rouleaux à contact oblique (1), comprenant une bague de roulement intérieure (2) avec un chemin de roulement intérieur (4) disposé sur sa surface circonférentielle extérieure (3) obliquement par rapport à l'axe de rotation du roulement (A_{L}) et un bord (5) délimitant ce chemin de roulement (4) à son plus petit diamètre, une bague de roulement extérieure (6) avec un chemin de roulement extérieur (8) disposé sur sa surface circonférentielle intérieure (7) également obliquement par rapport à l'axe de roulement central (A_{L}) et un bord (9) délimitant ce chemin de roulement (8) à son plus grand diamètre et une pluralité d'éléments de roulement à rouleaux (10) disposés entre les bagues de roulement (2, 6) et roulant sur leurs chemins de roulement (4, 8), qui sont maintenus à intervalles réguliers les uns des autres dans la direction circonférentielle par une cage de roulement (11), une tangente (3) à la surface circonférentielle extérieure de la bague de roulement intérieure (2) et une tangente (7) à la surface circonférentielle intérieure de la bague de roulement extérieure (6) au moins dans la zone des chemins de roulement (4, 8) s'étendant dans des directions opposées obliquement par rapport à l'axe de rotation du roulement (A_{L}) étant formées planes et les chemins de roulement (4, 8) des deux bagues de roulement (2, 6) étant chacun coniques dans ces surfaces circonférentielles, de sorte que les bords (5, 9) résultants délimitant respectivement d'un côté les chemins de roulement (4, 8) soient chacun formés d'une seule pièce avec les bagues de roulement (2, 6), **caractérisé en ce que** le roulement à rouleaux à contact oblique (1) est monté suivant un procédé de montage à pivot excentrique emprunté au procédé de montage excentrique connu pour les roulement à billes :
a) dans une première étape, la bague de roulement extérieure (6) est placée dans un logement dans une position au moins approximativement verticale avec sa face avant (16) conçue sans bord et est légèrement ovalisée par mise en tension à une ligne de 12 heures sur sa surface circonférentielle extérieure (17) contre une ligne de 6 heures sur sa surface circonférentielle extérieure (17) dans sa limite élastique.
b) dans une deuxième étape, les éléments de roulement à rouleaux (10) sont, soit individuellement, soit sous forme d'un ensemble de rouleaux (18) déjà pré-fixés en forme de fer à cheval dans un dispositif auxiliaire, placés avec leurs faces avant plus grandes (19) en avant, de la face avant (16) de la bague de roulement extérieure (6), qui est conçue sans bord, dans le chemin de roulement (8) de la bague de roulement extérieure (6).
c) dans une troisième étape, la bague de roulement intérieure (2), avec sa face avant (20) conçue sans bord et reposant sur un plan incliné, est automatiquement amenée à la bague de roulement extérieure (6) de manière à venir en butée, avec deux points opposés de son chemin de roulement (4), contre deux points de butée (21, 22) sur les surfaces de roulement (23) de deux éléments de roulement à rouleaux (10).
d) dans une quatrième étape, la bague de roulement intérieure (2) pivote dans une position verticale dans la bague de roulement extérieure (6) par une force centrifuge résultant de son accélération sur un plan incliné autour d'un axe horizontal formé entre ses points de butée (21, 22) sur les éléments de roulement à rouleaux (10), dans laquelle le bord (5) de la bague de roulement intérieure (2) repose au moins par endroits sur les plus petites faces avant (24) des éléments de roulement à rouleaux (10).
e) dans une cinquième étape, la bague de roulement intérieure (2) est déplacée dans une position coaxiale par rapport à la bague de roulement extérieure (6) et les éléments de roulement à rouleaux (10) sont uniformément répartis sur la circonférence dans leurs chemins de roulement (4, 8) dans les bagues de roulement (2, 6), annulant l'ovalisation de la bague de roulement extérieure (3).

2. Procédé selon la revendication 1, **caractérisé en ce que,** dans une sixième étape, la cage de roulement (11) en forme de cage à peignes est insérée avec ses éléments de liaison de cage (13) entre les éléments de roulement à rouleaux (10) depuis le côté présentant ses plus petites faces avant (24) et est encliquetée avec ses ergots d'encliquetage (14) sur la surface intérieure (15) du bord (5) sur la bague de roulement intérieure (2).

3. Procédé selon la revendication 1, **caractérisé en ce que,** dans une sixième étape, la cage de roulement (11) en forme de cage à peignes est insérée avec ses éléments de liaison de cage (13) entre les éléments de roulement à rouleaux (10) depuis le côté présentant ses plus grandes faces avant (19) et est encliquetée avec ses éléments de liaison d'encliquetage sur la surface intérieure du bord (9) sur la bague de roulement extérieure (6).

4. Dispositif de montage (30) pour la mise en œuvre du procédé selon au moins l'une des revendications 1 à 3, comprenant une partie de réception verticale (31) pour maintenir la bague de roulement extérieure (6) et pour la remplir avec les éléments de roulement à rouleaux (10) et une partie de rampe (32) disposée en regard de la partie de réception (31) et inclinée par rapport à celle-ci pour amener la bague de roulement intérieure (2) à la bague de roulement extérieure (6), la partie de réception (31) ayant une section transversale de profil en forme de L avec une patte horizontale ou presque horizontale (34) et une patte verticale ou presque verticale (33), **caractérisé en ce qu'**une surface (35) de la patte horizontale (34) est formée avec une forme concave (36) s'étendant jusqu'à la patte verticale (33) pour un logement debout d'une bague de retenue lâche (37) pour la bague de roulement extérieure (6).

5. Dispositif de montage (30) selon la revendication 4, **caractérisé en ce que** la patte verticale (33) est formée avec une ouverture circulaire (38) présentant au moins approximativement la taille du diamètre intérieur de la bague de roulement extérieure (6) à travers laquelle les éléments de roulement à rouleaux (10) peuvent être insérés dans le chemin de roulement (8) de la bague de roulement extérieure (6).

6. Dispositif de montage (30) selon la revendication 5, **caractérisé en ce que** deux éléments de liaison de butée (39, 40) sont disposés dans l'ouverture (38) de la patte verticale (33) et sont approximativement décalés de 190 ° l'un par rapport à l'autre et font saillie dans la bague de retenue lâche (37), entre lesquels l'ensemble de rouleaux (18) amené à la bague de roulement extérieure (6) peut être fixé en position dans celle-ci.

7. Dispositif de montage (30) selon la revendication 6, **caractérisé en ce qu'**à l'extrémité libre de la patte verticale (33) sur la ligne de 12 heures de la surface circonférentielle de la bague de retenue lâche (37), un dispositif pour générer une force de pression verticale pour ovaliser la bague de roulement extérieure (6) est fixé, par exemple un manchon (41) formé avec un filetage intérieur, dans lequel une vis de réglage (42) est disposée en rotation.

8. Dispositif de montage (30) selon la revendication 7, **caractérisé en ce que** la partie de rampe (32) présente une glissière plate inclinée (43) avec deux bords de guidage latéraux (44, 45), dont l'espacement correspond approximativement au diamètre extérieur de la bague de roulement intérieure (2).

9. Dispositif de montage (30) selon la revendication 8, **caractérisé en ce que** l'extrémité de la glissière (43) du côté de la bague de retenue est fixée à deux paliers (46, 47) et la glissière (43) peut être fixée par l'intermédiaire de ces paliers (46, 47) de manière amovible sur la surface (35) de la patte horizontale (34) de la partie de réception (31), par exemple via une connexion à broches.
